# EUROPEAN PATENT APPLICATION

(11) **EP 1 176 525 A1**
(43) Date of publication of application: **30.01.2002**
(21) Application number: 00830520.3
(22) Date of filing: 24.07.2000
(51) Int. Cl.: G06F 17/50

(54) **System for the management of data for the design of silicon devices**

(71) Applicant: STMicroelectronics S.r.l., 20041 Agrate Brianza (Milano) (IT)
(72) Inventor: Maimone, Antonio, 98057 Milazzo (Provincia di Messina) (IT); Arena, Domenico, 95030 Cravina di Catania (Prov. Catania) (IT)
(74) Representative: Modiano, Guido, Dr.-Ing.

(57) **Abstract**

A system for the management of data, particularly for the design of silicon devices, comprising:
a database;
at least one library which is adapted to contain project data and with which at least a name, a type of data contained therein, and its address are associated; and
at least one table which is contained in the database and is adapted to log the at least one library; the library is transferable from one design site to another and can be shared by a plurality of design sites.

## Description

The present invention relates to a system for the management of data for the design of silicon devices.

More particularly, the invention relates to a system for the general management of data related to the design of silicon devices.

It is known that correct management of design data is crucial for a project, since it allows to avoid severe problems which may arise from less than optimum data control, particularly when a project for developing a new product is conducted at a plurality of mutually separate sites.

A project conducted at a plurality of sites requires much greater attention as regards project data control, so that incompatibilities do not arise among the separate databases that each design team has at its work site.

It is in fact indispensable that the various project databases be mutually compatible, so as to correlate the design developments produced by one work team at one site with those produced by the other workgroups at the other sites.

At present, the management of data for the design of silicon devices uses systems originally conceived for the development of software.

However, the specific problems that can occur in the management of data for the design of silicon devices are not always exactly analogous to those of software development, and accordingly systems expressly dedicated to software development do not have an optimum application in the field of the design of silicon devices.

In particular, a system for the management of data for the design of silicon devices should be able to perform, for example, the following operations:
management of specific data for a particular tool, with its own data management system:
verification of the compatibility of different design data representations;
management of the configurations of tools such as CAD and their versions used for a project;
management of test data and result data produced by the various CAD tools;
reuse of data without duplication thereof;
management of a database which contains a very large amount of data.

A management system conceived specifically for the management of the design data of silicon devices should also allow the periodic controlled release of modules to check the level of development achieved at different stages of the project. Moreover, the data management system should have a clear and simple organization of the design data, so as to allow to rapidly comprehend the position of the data and their purpose.

Moreover, data management systems conceived exclusively for software product development are highly complex and require considerable effort when they have to be customized in order to be able to control new tools.

The aim of the present invention is to provide a system for the management of data for the design of silicon devices which allows to manage in a simple and orderly fashion the flow of design data which may be generated at different work sites.

Within the scope of this aim, an object of the present invention is to provide a system for the management of data for the design of silicon devices which allows to easily transfer data among different design sites.

Another object of the present invention is to provide a system for the management of data for the design of silicon devices which allows to implement the reuse of data for future projects.

Another object of the present invention is to provide a system for the management of data for the design of silicon devices which allows to manage a large amount of data.

Another object of the present invention is to provide a system for the management of data for the design of silicon devices which allows to perform compatibility checks among data developed at different design sites.

Another object of the present invention is to provide a system for the management of data for the design of silicon devices which is highly reliable, relatively simple to provide and at competitive costs.

This aim, these objects and others which will become apparent hereinafter are achieved by a system for the management of data, particularly for the design of silicon devices, characterized in that it comprises:
a database;
at least one library which is adapted to contain project data and with which at least a name, a type of data contained therein, and its address are associated; and
at least one table which is contained in said database and is adapted to log said at least one library; said library being transferable from one design site to another and being sharable by a plurality of design sites.

Further characteristics and advantages of the invention will become better apparent from the description of a preferred but not exclusive embodiment of the system according to the invention, illustrated only by way of non-limitative example in the accompanying drawings, wherein:
Figure 1 is a schematic representation of the system according to the present invention;
Figure 2 is an exemplifying block diagram of a possible embodiment of a structure of a library used in the system according to the present invention;
Figure 3 is a flowchart of a procedure for the release of a library;
Figure 4a is a flowchart of a procedure for sending libraries; and
Figure 4b is a flowchart of a procedure for installing libraries.

With reference to the above-cited figures, the system for the management of data particularly for the design of silicon devices, is based on the concept of a project data library, which is the fundamental organizational element of the data.

In the system according to the present invention, a library is a collection of files and directories. Each library has a name of its own and an associated data type. Each data type is further organized into a specific directory and file structure which is adapted for its specific requirements.

A library is a rough organization of the project data. For example, the project should not be separated in a library by blocks or by hierarchical levels. For example, a single main subsystem has its own library and might contain sublibraries organized according to the main functional blocks. The library must be used to contain a group of reusable cells which are correlated to a particular subsystem or to the entire project. The cells need not be mutually correlated.

Substantially, the system according to the present invention has the configuration of a tool for the management of data on a higher level, since it is based on libraries instead of files/directories, and as such sets no limitations to the management of the data within a specific library.

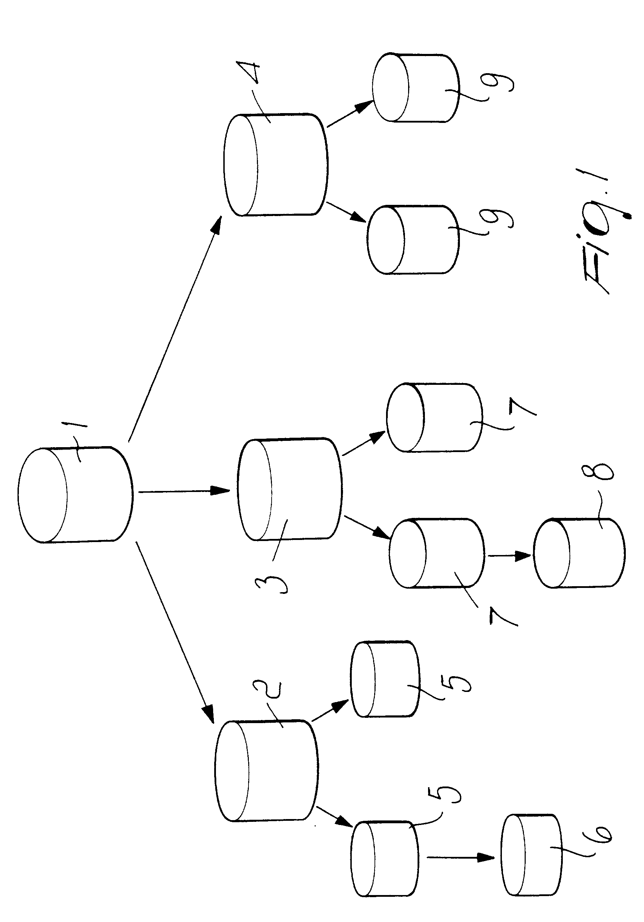

Figure 1 is a schematic view of the structure of the system according to the present invention, wherein the reference numeral 1 designates the name of the program directory, the reference numeral 2 designates project library areas, the reference numeral 3 designates a set of libraries that compose a given product, and the reference numeral 4 designates tools used to design the silicon device.

Each library area 2 leads to reusable libraries 5, which are therefore collections of data which may subsequently be used for other projects, different from the current project that generated said reusable libraries 5.

Each reusable library 5 can in turn have at least one reusable sublibrary 6.

As regards the reference numeral 3, i.e., the set of libraries that compose a given product, differently from the libraries contained in the block designated by the reference numeral 2, these data libraries are reusable for different product variations.

The libraries contained in the area designated by the reference numeral 3 point to areas which contain libraries which are specific for a given product variation, and this area contains at least one library 8 which is specific for a given variation of the product.

The reference numeral 4, which designates the area of the tools used for the design of silicon devices, points to at least one area 9 which contains a particular design tool.

Substantially, the product area 3 contains a directory for each product variation. Each one of these directories further contains specific library areas for the product variation and the product-specific higher-level library.

The reference numeral 7 designates the product-specific higher-level library, and the reference numeral 8 designates the product variation-specific library.

When a product is finally released, after design, all its libraries are copied into the product-specific area 7 in order to provide a database which corresponds to the moment of product release; said database is frozen and therefore defines all the characteristics of the product at a given point in time during its design.

By using the system according to the invention, it is possible to reference the same library, or even different versions of the same library, in different products.

Moreover, the system according to the invention allows to manage a large amount of data and track, for each library, which version of the library is used, removing any unused versions.

Any designer can further query the database and find information as to which library is under his control, the path where the library is located in the network, and the version of the library that is used.

The organization of the data in libraries and data types reduces the problems of maintaining the database at a plurality of design sites, thus reducing the rate of transfers at the level of release libraries of a particular data type.

A library can be developed only at one design site, and this prevents the same design work from being conducted in parallel at different sites, thus optimizing resources.

It is also possible to develop the same project at different sites, sharing the libraries that are produced in each instance for a given part of the project.

The system according to the invention further allows automatic release of libraries, based on the release of a main library at one site and therefore on copying at the other sites libraries which are purely frozen versions of the main library. If the design of a device takes place at two different sites, two different libraries are required, one being managed at one site, the other one being managed at the other site, with reference to a copy library, which is stable.

When a given project is conducted at a plurality of sites which cooperate on a project database, there are problems related to the transfer of data and to compatibility among said data. These problems are reduced by using the system according to the invention by limiting data transfers to the level of the released library. In other words, a data transfer between one site and another is initiated exclusively by the release of a library.

Compatibility among different design sites is maintained by logging in a single main file the status of each data type of each library. Upon release, this file is updated at the local site. The remote status in a library is also logged for libraries managed locally, so that all the new released libraries can be periodically transferred and installed on the remote sites.

Substantially, the system according to the invention allows to organize the design data into libraries and data types, the library being the fundamental element of data organization. A library is, therefore, the basic unitary element of the database.

Each library managed by the system according to the invention must be logged in system tables, which are text files that contain information regarding the characteristics of the library. In particular, the logging of a library entails placing an "entry" in the database and "informing" the system of the new library. For each library, the database must know its name, type, location, which remote design sites need to receive it, or whether the site being considered will receive the library from an external site.

The release of a library entails copying data from the development area into a new area. Various versions might exist for each library and different projects might reference different versions of the same library. One particular project might reference exclusively a specific version of a library. At the time of release of the library, the system tables are updated and the project (and therefore the design site) that owns the library automatically refers to the new version. It is possible to change version by changing the tables by using a particular command of the system according to the invention.

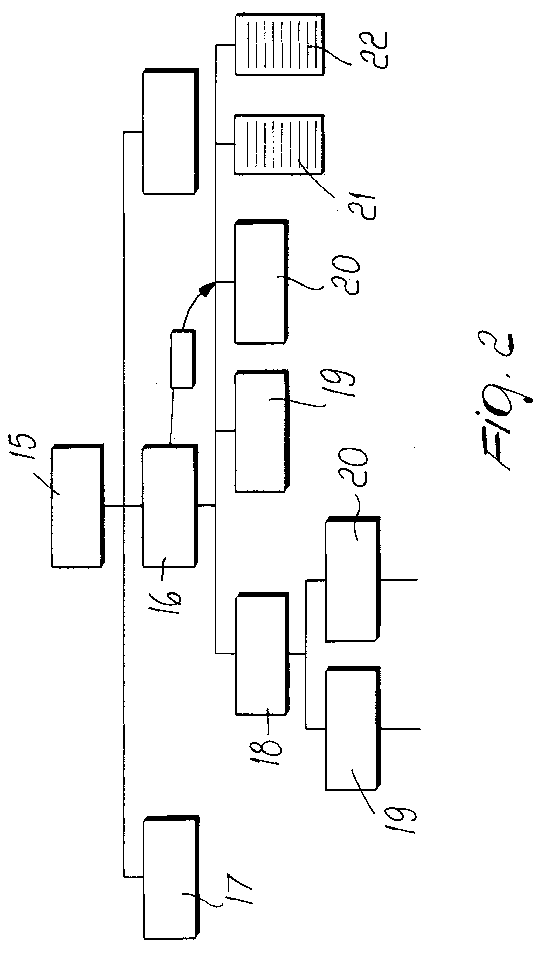

Figure 2 is a block diagram of an exemplifying structure of a library, for example in the case of VHDL data.

The reference numeral 15 designates the name of the library, the reference numeral 16 designates the data type, the reference numeral 17 designates a sublibrary, the reference numeral 18 designates a library development area, and the reference numerals 19 and 20 respectively designate two released areas, i.e., released libraries which as such contain a data configuration which was frozen at a given point in time of the design process.

The reference numeral 19 designates the source code of the program contained in the development area 18 and the reference numeral 20 designates an area for the simulation of the developed program.

The reference numeral 21 designates a file for informing of the release time of the library, and the reference numeral 22 designates the e-mail address of the user to whom release of the library is notified.

Figure 2 is a flowchart of the steps for the release of the library.

Each release area 19 and 20 is read-only and cannot be modified. In order to perform error correction on a specific version of a library, the following operations must be performed:
release a library from a fixed version, i.e., the version that is present in the area 19 and 20, renaming the development area 18 so as to save its contents, and then copy the released area 19 and 20 into the development area 18.

At this point, error correction can be performed and the new development area, which is now modified, can be released as a released area, restoring its contents which had been saved when the released area 19 and 20 was copied into the development area 18.

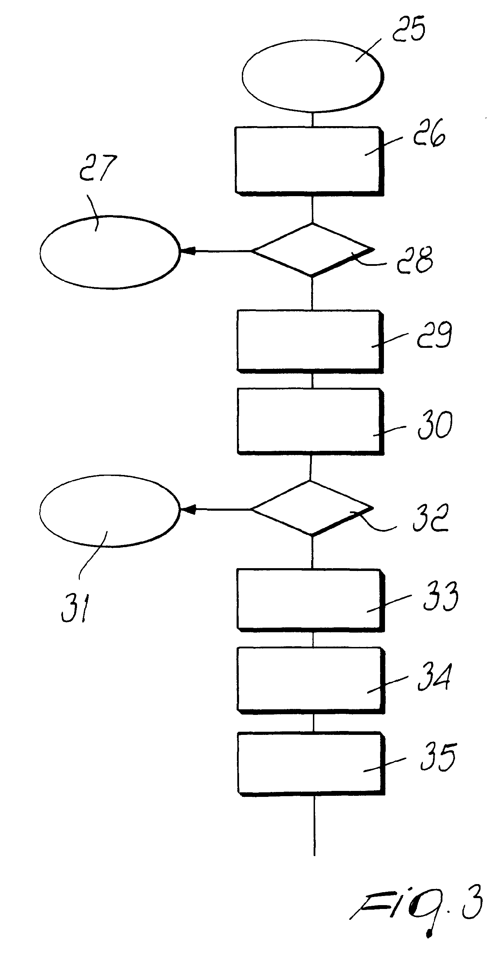

Figure 3 is a flowchart of the operation for releasing a library, which comprises: a first step 25 for verifying that the data of the library are ready; a subsequent step 26 for pre-release verification, which interrupts the procedure, step 27, if its outcome is negative or, if its outcome is positive, step 28, leads to a data copying operation, step 29.

This is followed by a further verification, step 30, after copying the data; failure of this verification, step 31, leads to interruption of the procedure; success of said verification, step 32, leads to a step for updating the main table, step 33, with a corresponding updating of the current pointer, step 34, and notification, step 35, to the chosen user (site) of the library.

The system according to the invention allows to perform various verifications on the data, particularly two kinds of verification:
verifications on the data, conducted during release in a library, which ensure that the released data are consistent and that the released area is self-contained, i.e., there is no reference to data that has not yet been released;
verifications on metadata, i.e., the data contained in the text files of the tables, to ensure that the database of the system is up to date and there are no incompatibilities among the data.

The most important verifications on the metadata are:
before logging a library, the directory structure where the library is located must exist;
before releasing a library, said library must be logged. A non-main site, i.e., a site that receives a library, cannot release an updated version of the library;
in order to maintain compatibility of the database among different sites, possibly including remote ones, routines capable of performing remote verifications are executed.

The system according to the invention allows to transfer libraries from one site to another. It is based on the concept of master/slave site for each library of a project. A library must have only one master site and the master site is where that library is developed. If a library is logged in the system tables as a "slave" library, this means that it is developed elsewhere and is transferred automatically upon release.

The library is therefore transferred automatically to the remote site after release, and the system periodically and automatically queries the first database in order to send all the libraries that have been released but not yet sent. The system according to the invention sends each library to the correct remote ("slave") site in accordance with the metadata contained in the text files of the system tables.

Each slave site periodically and automatically checks the libraries that have been sent by remote sites and installs them, and the system is capable of automatically installing libraries that have been sent and logged locally.

The library transfer mechanism is automatic and transparent from the database administrator.

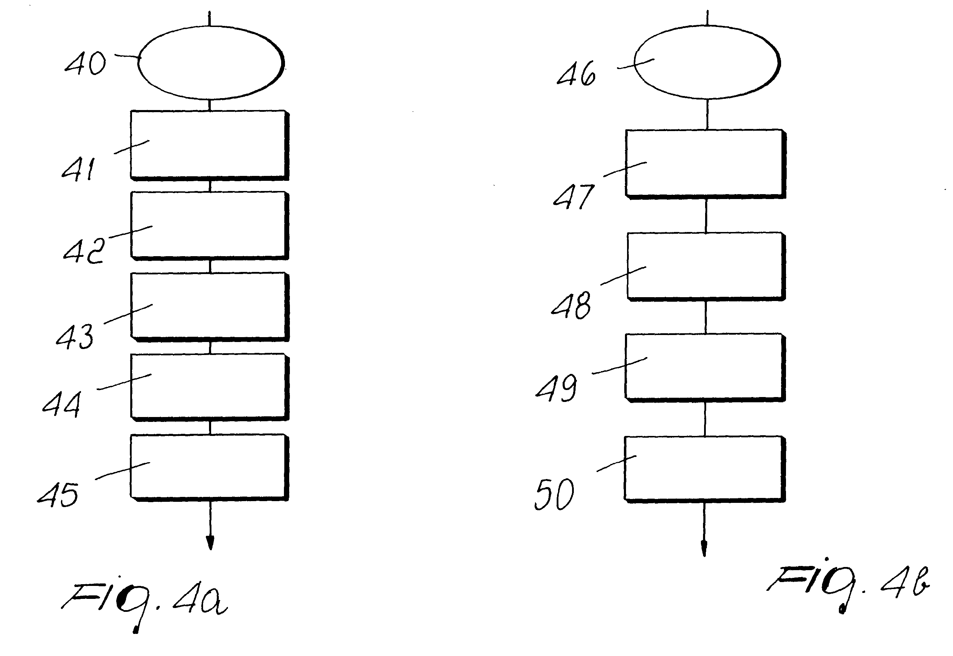

Figure 4a is a flowchart of the method for sending libraries from one site to another. The method provides for a first step 40, which determines that the time to transfer a library has come; this is followed by a step 41 for searching in the main table in order to read the metadata that determine to whom (to which site) the library is to be transferred.

At this point, step 42, the library is compressed and, step 43, transferred to the remote sites, consequently updating the local table of the site where the transfer is performed, and a notification is sent to the user, step 45, so as to inform him that the library has been transferred to the site to which the user belongs.

Figure 4 instead illustrates a step of the installation of the library at the remote site once the library has been sent.

This operation provides for a first step 46 for verifying that the library has been sent completely, a step 47 for verifying that the library has arrived at the remote site where it is to be installed, a step 48 for decompressing the data of the library, a step 49 for updating the local table and a step 50 for notifying that installation has been performed.

In practice it has been observed that the system according to the invention allows to design silicon devices at a plurality of design sites, even mutually remote ones, with the possibility to transfer libraries of data from one site to another, so as to be able to perform so-called multisite design.

The use of a library as a fundamental unitary element of the system allows to define project data at all times during design and then transfer a sort of "frozen" situation of the project when a library containing the data updated up to that point in time of the design process is transferred.

Moreover, the use of libraries allows to effectively reuse project data which can be common for different products and to provide a collection of libraries dedicated to a particular product or a slightly differentiated collection dedicated to a different version of the same product.

The system thus conceived is susceptible of numerous modifications and variations, all of which are within the scope of the same inventive concept: all the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A system for the management of data, particularly for the design of silicon devices, **characterized in that** it comprises:
a database;
at least one library which is adapted to contain project data and with which at least a name, a type of data contained therein, and its address are associated; and
at least one table which is contained in said database and is adapted to log said at least one library; said library being transferable from one design site to another and being sharable by a plurality of design sites.

2. The data management system according to claim 1, **characterized in that** a list of design sites that must receive said library is further associated with said library and can be queried by said database in order to periodically send said library to said design sites.

3. The data management system according to claim 1, **characterized in that** the transfer of said library from one design site to another site entails copying said library into a library release area which is read-only.

4. The data management system according to claim 1, **characterized in that** said at least one library is transferred automatically at a preset time to one or more design sites which are remote with respect to the design site that generated said library and updates it in each instance, said design site being the site that owns said library, the sites meant to receive said library being slave sites.

5. The data management system according to one or more of the preceding claims, **characterized in that** the transfer of said at least one library is performed following the querying of said at least one logging table of said library on the part of the database.

6. The data management system according to one or more of the preceding claims, **characterized in that** the address of said library is defined by the directory path in said database.

7. The data management system according to one or more of the preceding claims, **characterized in that** said library sent to each slave site is periodically installed in said slave site.

8. The data management system according to one or more of the preceding claims, **characterized in that** said library that is transferred and installed at said slave site is logged locally in said slave site.

9. The data management system according to one or more of the preceding claims, **characterized in that** it comprises at least one area of project libraries which are adapted to be reused for different project types, at least one area of libraries which are adapted to contain all the data related to a given product, and at least one area which is adapted to contain design programs used to design said silicon devices.

10. The data management system according to claim 9, **characterized in that** said at least one area of project libraries points to at least one area of libraries that can be reused for different project types and indirectly points to at least one area of reusable sublibraries.

11. The data management system according to claim 9, **characterized in that** said at least one area of libraries containing all the data related to a product points to at least one area which contains a library which is specific for a given product variation.
